# EUROPEAN PATENT SPECIFICATION

(11) **EP 3 775 326 B1**
(45) Date of publication and mention of the grant of the patent: **13.03.2024**
(21) Application number: 19715000.6
(22) Date of filing: 13.03.2019
(51) Int. Cl.: C25D 9/08, H01G 9/20

(54) **PRODUCING NANOPOROUS FILMS OF SEMICONDUCTING METAL OXIDES**
HERSTELLUNG NANOPORÖSER FILME AUS HALBLEITENDEN METALLOXIDEN
PRODUCTION DE FILMS NANOPOREUX D'OXYDES MÉTALLIQUES SEMI-CONDUCTEURS

(30) Priority: 28.03.2018 PL 42504518
(43) Date of publication of application: 17.02.2021
(73) Proprietor: UNIWERSYTET JAGIELLONSKI, 31-007 Kraków (PL)
(72) Inventor: RYSZ, Jakub, 32-070 Czernichow (PL); AWSIUK, Kamil, 30-384 Krakow (PL); DABCZYNSKI, Pawel, 26-130 Suchedniow (PL); MARZEC, Mateusz, 31-234 Krakow (PL)
(74) Representative: Kancelaria Eupatent.pl Sp. z.o.o
(86) International application number: PCT/EP2019/056361
(87) International publication number: WO 2019/185357

(56) References cited:
- EP-A1- 2 397 230
- JP-A- 2001 070 869
- US-A1- 2013 142 566
- US-A1- 2018 012 782

## Description

### TECHNICAL FIELD

The present invention relates to a method for producing nanoporous films of semiconducting metal oxides, in particular titanium oxide films forming an electrode of dye sensitized solar cells (DSSC), by depositing a solution using a moving meniscus method in a presence of an electric field.

The presented method can be used in a mass production of large-format third-generation solar cells based on organic dye sensitized films of, for example, titanium oxide or zinc oxide.

### BACKGROUND

In third generation solar cells, light absorption occurs in a thin film of an organic dye that coats small crystals of a transparent semiconductor, such as titanium oxide. As a result of the absorption, organic molecules become excited and transfer an electron to the inorganic semiconductor, from where it is transferred to a circuit powered by the solar cell via a transparent electrode. A counter electrode is generally coated with carbon or platinum nanoparticles. Between the electrodes, there is a liquid electrolyte wherein oxidation and reduction reactions take place, which facilitates compensating the dye's charge by transferring it from the counter electrode.

In order to ensure high performance of such a device, the nanoporous film of an inorganic semiconductor, which is TiO₂ or ZnO, shall have a large active area, shall be continuous (to enable free transport of the charge to the electrode), and shall allow electrolyte penetration. Such films are usually formed by applying a paste made of an organic binder with nanocrystals suspended in it, as described in a publication "Preparation of the working electrode of dye-sensitized solar cells using screen printing with alkyd resins" (An-Ni Huang et al., Energy Procedia 61 (2014) 1528-1531). After applying a layer of the paste, it is sintered in high temperatures (400-600°C), in order to remove the organic component.

In the case of commercial DSSC solar cells, TiO₂ films are applied by screen printing a paste on transparent electrodes, the geometry of which is chosen to optimize the device working parameters. Subsequently, such nanoporous films of TiO₂ are dyed by deposition of organic dye molecules or metal-organic complexes.

Attempts to determine alternative methods of forming nanoporous films of TiO₂, ZnO resulted in a development of technologies of deposition from a solution using electric field and electric current, as described in the publications "Electrodeposition of TiO₂ and RuO₂ thin films for morphology-dependent applications" (Lokhande, C. D. et al., Ultramicroscopy 2005, 105 (1), 267-274), "Electrophoretically deposited TiO2 photo-electrodes for use in flexible dye-sensitized solar cells" (Yum, J.-H. et al., Journal of Photochemistry and Photobiology A: Chemistry 2005, 173 (1), 1-6.), "Electrodeposition and characterization of transparent ZnO thin films" (T.Mahalingama et al., Solar Energy Materials and Solar Cells 2005, 88(2), 227-235), or "Electrodeposition of aligned arrays of ZnO nanorods in aqueous solution" (RaviChander A.K.Raychaudhuri, Solid State Communications 2008, 145(1-2), 81-85). As described in those publications, the transparent electrode is immersed together with the counter electrode in a bath containing appropriate reagents and nanocrystals. Voltage supplied to the electrodes causes deposition of metal oxide nanocrystals on the substrate. It was demonstrated that such approach allows abandoning the high-temperature sintering that requires large energy inputs. One limitation of the above-described methods is the necessity to immerse the coated surfaces in the bath, which requires large amount of the solution and tanks of appropriate capacity Another method for producing films of semiconducting metal oxides is disclosed in EP2397230.

There is a need to provide an alternative method for producing nanoporous films of semiconducting metal oxides, in particular titanium oxide or zinc oxide, in particular constituting the electrode of dye sensitized solar cells.

### SUMMARY OF THE INVENTION

The invention is related to a method for producing nanoporous films of semiconducting metal oxides according to the appended claims.

### BRIEF DESCRIPTION OF DRAWINGS

The present invention is shown by mens of non-limiting example embodiments shown in a drawing, wherein:
Fig. 1 shows schematically an example of the apparatus for use in the method according to the invention;
Fig. 2A-2D show various embodiments of the guiding elements.

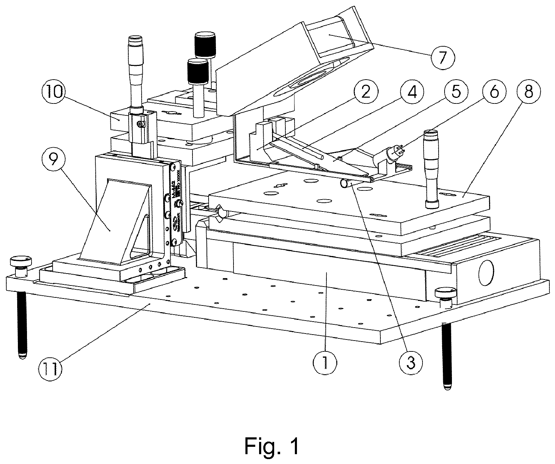

The method according to the invention can be conducted, for example, using the apparatus shown in Fig. 1.

The apparatus is used for spreading a solution by means of a guiding element (which in this embodiment has the form of a cylinder) which is located at a small distance from a moving substrate and which is coated with a transparent electrode. A small amount of the solution is dosed between the substrate and the guiding element such as to form a meniscus. Additionally, between the conducting substrate and the guiding element coated with the metallic electrode (e.g. a gold electrode), a voltage source 14 (of a direct or alternating voltage) or a current source 15 (of a direct or alternating current) is connected.

The apparatus comprises a linear stage 1 that effects the movement of the substrate in relation to the fixed guiding element 3, which results in spreading of the solution on the substrate. The linear stage 1 allows choosing appropriate velocity, as well as acceleration. A chuck 2 allows mounting the guiding element 3 used for spreading a film of the solution. In order to obtain a uniform film over as large an area as possible, the guiding element 3 used for spreading the film in relation to the sample surface shall be appropriately arranged and the entire system shall be levelled. In order to achieve that, a number of elements allowing the appropriate arrangement of particular components of the apparatus can be used. A micrometer Z-stage 9 allows positioning the guiding element 3 to an particular distance from the substrate with the accuracy of several µm. A first platform 8 allows adjusting the inclination of the substrate, so as to allow the guiding element 3 to move at a constant height along its entire length. A second platform 10 allows correcting the tilt of the guiding element 3, so as to allow the guiding element 3 to be parallel to the substrate surface. The entire apparatus can be additionally installed on a third platform 11 with three adjustable legs that allow levelling the whole apparatus.

The guiding element 3 for spreading the solution film can be made of glass or other materials. The surface of the guiding element 3 is coated with a metal film (preferably gold) that serves as an electrode.

Between the conductive sample and the electrode on the guiding element 3, a voltage is applied from the voltage source, which induces electric field directed perpendicularly to the substrate. The voltage source generates direct or alternating electric voltage with, for example, square, sinusoidal, or triangle waveforms.

A conductive substrate coated with a transparent electrode is inserted to the apparatus described above and installed on the platform 8 mounted on the linear stage 1. Because the platform 11 stands on three levelling feet, it is possible to level the entire apparatus. Additional levelling is provided by the platform 8 equipped with a system for adjusting inclination in at least one plane, preferably in three planes. Similarly, a platform 10 of the guiding element 3 can be equipped with a system for adjusting inclination in at least two planes (preferably in three planes) and a chuck for a slide 5 with a rod 4 and the guiding element 3 coated with metallic electrodes is fastened to it rigidly.

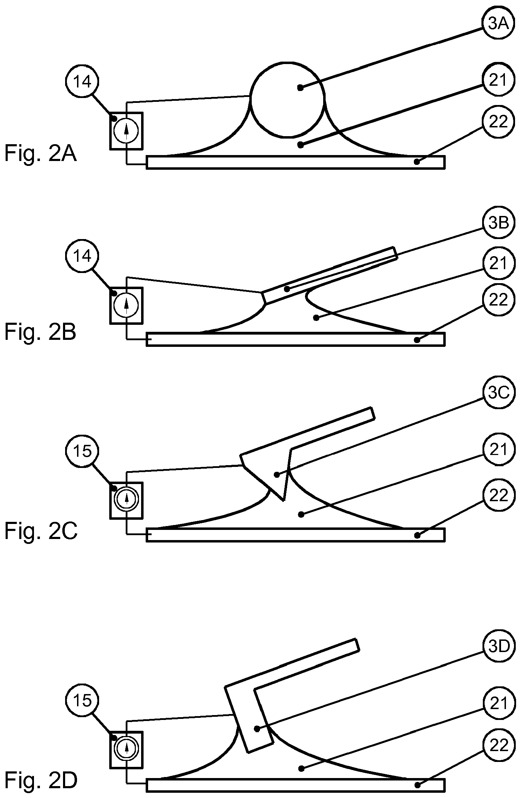

In the apparatus presented in Fig. 1, various types of guiding elements 3 shown schematically in Fig. 2A-2D can be used (for example, associated with the voltage source 14 or the current source 15, which sources can be used interchangeably with different guiding elements 3).

For example, the guiding element 3 can have a form of a cylinder 3A. The cylinder 3A is a solid of revolution, i.e. a solid that is rotationally symmetrical with respect to its axis.

Alternatively, the guiding element 3 can have a form of a flat plate 3B, a pyramid 3C, or a cuboid 3D. A common feature of the elements 3B, 3C, 3D is that they are rotationally asymmetrical solids, i.e. their surface is rotationally asymmetrical with respect to their axis, so that by adjusting their inclination angle with respect to the substrate 22, the shape of the formed meniscus 21 can be adjusted and, as a result, the reaction parameters can be affected. In particular, these guiding elements allow adjusting the shape of the formed meniscus 21, so that the formed meniscus at is asymmetric in a standstill, i.e. the shape of the meniscus at the front contact edge is different from its shape at the back contact edge.

In alternative embodiments of the apparatus, the guiding element 3 can be movable over a fixed base instead of the linear stage 1.

In yet other embodiments, instead of the linear stage 1, other substrate movement mechanisms can be used, for example a system of rollers for moving rigid substrates or systems that stretch flexible substrates.

In another embodiment, both the guiding element 3 and the substrate (on the linear stage or a different movement mechanism) can be movable at the same time.

In the presented embodiment, the substrate is supposed to be arranged horizontally (using the above-mentioned adjusting elements). However, alternative embodiments are also possible, wherein the substrate can be arranged at a specific angle or vertically.

The method is conducted as follows.

After levelling the system, a solution containing a precursor of a metal oxide which will form a nanoporous film of TiO₂ or ZnO, is deposited between the substrate coated with the transparent electrode and the guiding element 3,.

The transparent electrode coating the substrate can be made of a transparent conductive oxide (TCO) which ensures good electric conductivity with negligible light intensity losses.

The solution comprises a precursor which is either titanium trichloride (TiCl₃) dissolved in hydrochloric acid (HCl) or an aqueous solution of zinc nitrate.

Subsequently, by effecting movement between the guiding element and the substrate, a film of the solution is spread on the substrate. While spreading the solution, a controlled current source (for the electrodeposition process) or voltage source (for the electrophoresis process) is activated between the metal electrode on the guiding element 3 and the substrate coated with the transparent electrode.

Thus, a reaction is initiated, that results in a formation of a nanoporous film of TiO₂ or ZnO on the surface of the transparent electrode.

For example, the following reactions can be triggered:
a)

   Ti³⁺ + H₂O →TiOH²⁺ + H⁺

   TiOH²⁺ →e⁻ + TiO₂
b)

   Zn(NO₃)₂→Zn²⁺+2NO₃⁻,

   NO₃⁻+H₂O+2e→NO₂⁻+20 H⁻,

   Zn²⁺+2OH⁻→Zn(OH)₂,

   Zn(OH)₂→ZnO+H₂O

By using a dosing system comprising a precise pump (e.g. a syringe pump) for dosing the solution directly to the meniscus, a fixed concentration of components in the solution can be ensured.

As compared with technologies known from prior art, in the method according to this invention, the nanocrystals are joined together without the need to use a binder, which does not require the sintering of TiO₂ films in high temperatures, which reduces costs and enables use of flexible substrate made of plastic. Conducting the reaction in a moving meniscus reduces the amount of solution necessary to conduct the reaction and allows coating substrates of any sizes. In particular, the reaction can be conducted continuously on substrates of any length.

Furthermore, by turning the voltage source 14 or current source 15 on and off, substrates can be coated in a selective way without the need to prepare masks as in the screen printing process.

## Claims

1. A method for producing nanoporous films of semiconducting metal oxides comprising the steps of
- preparing a solution containing a precursor of a semiconducting metal oxide;
- applying the solution on a substrate (22);
- forming a meniscus (21) by dosing the solution between the substrate (22) and a guiding element (3), wherein the guiding element (3) comprises a metal electrode;
- moving the solution by effecting movement of the guiding element (3) with respect to the substrate (22); and
- connecting a voltage source (14) or a current source (15) between the metal electrode of the guiding element (3) and the substrate (22), to produce a metal oxide nanoporous film from the solution on the substrate (22),
- wherein the solution comprises titanium trichloride (TiCl₃) dissolved in hydrochloric acid (HCl) and a titanium oxide (TiO₂) nanoporous film is produced or the solution comprises an aqueous solution of zinc nitrate (Zn(NO₃)₂ and a zinc oxide (ZnO) nanoporous film is produced.

2. The method according to claim 1, comprising use of a direct voltage source (14).

3. The method according to claim 1, comprising use of an alternating voltage source (14).

4. The method according to claim 1, comprising use of a direct current source (15).

5. The method according claim 1, comprising use of an alternating current source (15).

6. The method according to any of preceding claims, wherein the meniscus (21) is formed in an apparatus comprising a platform (8) for the substrate (22); a guiding element (3) movable with respect to the platform (8) and configured to spread the solution on the substrate (22) into the meniscus (21), and the voltage source (14) or the current source (15) coupled with the guiding element (3).

7. The method according to claim 6, wherein the guiding element has a form of a cylinder (3A).

8. The method according to claim 6, wherein the guiding element (3) has a form of a rotationally asymmetrical solid (3B, 3C, 3D).

## Patentansprüche

1. Verfahren zur Herstellung nanoporöser Filme aus halbleitenden Metalloxiden, umfassend die folgenden Schritte:
- Vorbereiten einer Lösung, die einen Vorläufer eines halbleitenden Metalloxids enthält;
- Auftragen der Lösung auf ein Substrat (22);
- Bilden eines Meniskus (21) durch Dosieren der Lösung zwischen dem Substrat (22) und einem Führungselement (3), wobei das Führungselement (3) eine Metallelektrode umfasst;
- Bewegen der Lösung durch Bewirken einer Bewegung des Führungselements (3) in Bezug auf das Substrat (22); und
- Anschließen einer Spannungsquelle (14) oder einer Stromquelle (15) zwischen der Metallelektrode des Führungselements (3) und dem Substrat (22), um aus der Lösung auf dem Substrat (22) einen nanoporösen Metalloxidfilm zu erzeugen,
- wobei die Lösung in Salzsäure (HCl) gelöstes Titantrichlorid (TiCl₃) umfasst und ein nanoporöser Film aus Titanoxid (TiO₂) erzeugt wird oder die Lösung eine wässrige Lösung von Zinknitrat (Zn(NO₃)₂ umfasst und ein nanoporöser Film aus Zinkoxid (ZnO) erzeugt wird.

2. Verfahren nach Anspruch 1, umfassend eine Verwendung einer Gleichspannungsquelle (14).

3. Verfahren nach Anspruch 1, umfassend eine Verwendung einer Wechselspannungsquelle (14).

4. Verfahren nach Anspruch 1, umfassend eine Verwendung einer Gleichstromquelle (15).

5. Verfahren nach Anspruch 1, umfassend eine Verwendung einer Wechselstromquelle (15).

6. Verfahren nach einem der vorhergehenden Ansprüche, wobei der Meniskus (21) in einer Einrichtung gebildet wird, die Folgendes umfasst: eine Platte (8) für das Substrat (22); ein Führungselement (3), das in Bezug auf die Platte (8) bewegbar und dazu konfiguriert ist, die Lösung auf dem Substrat (22) in den Meniskus (21) zu verteilen, und wobei die Spannungsquelle (14) oder die Stromquelle (15) mit dem Führungselement (3) gekoppelt ist.

7. Verfahren nach Anspruch 6, wobei das Führungselement die Form eines Zylinders (3A) aufweist.

8. Verfahren nach Anspruch 6, wobei das Führungselement (3) die Form eines rotationsasymmetrischen Festkörpers (3B, 3C, 3D) aufweist.

## Revendications

1. Procédé permettant de produire des films nanoporeux d'oxydes métalliques semiconducteurs comprenant les étapes de :
- préparation d'une solution contenant un précurseur d'un oxyde métallique semiconducteur ;
- application de la solution sur un substrat (22) ;
- formation d'un ménisque (21) en dosant la solution entre le substrat (22) et un élément de guidage (3), ledit élément de guidage (3) comprenant une électrode métallique ;
- déplacement de la solution en effectuant un mouvement de l'élément de guidage (3) par rapport au substrat (22) ; et
- raccordement d'une source de tension (14) ou d'une source de courant (15) entre l'électrode métallique de l'élément de guidage (3) et le substrat (22), pour produire un film nanoporeux d'oxyde métallique à partir de la solution sur le substrat (22),
- ladite solution comprenant du trichlorure de titane (TiCl₃) dissous dans de l'acide chlorhydrique (HCl) et un film nanoporeux d'oxyde de titane (TiO₂) étant produit ou ladite solution comprenant une solution aqueuse de nitrate de zinc (Zn(NO₃)₂ et un film nanoporeux d'oxyde de zinc (ZnO) étant produit.

2. Procédé selon la revendication 1, comprenant l'utilisation d'une source de tension continue (14).

3. Procédé selon la revendication 1, comprenant l'utilisation d'une source de tension alternative (14).

4. Procédé selon la revendication 1, comprenant l'utilisation d'une source de courant continu (15).

5. Procédé selon la revendication 1, comprenant l'utilisation d'une source de courant alternatif (15).

6. Procédé selon l'une quelconque des revendications précédentes, ledit ménisque (21) étant formé dans un appareil comprenant une plateforme (8) pour le substrat (22) ; un élément de guidage (3) mobile par rapport à la plateforme (8) et conçu pour répandre la solution sur le substrat (22) dans le ménisque (21), et ladite source de tension (14) ou ladite source de courant (15) étant couplée à l'élément de guidage (3).

7. Procédé selon la revendication 6, ledit élément de guidage comportant la forme d'un cylindre (3A).

8. Procédé selon la revendication 6, ledit élément de guidage (3) comportant la forme d'un solide asymétrique en rotation (3B, 3C, 3D).
